(19) Europäisches Patentamt
European Patent Office
Office européen des brevets

(11) **EP 1 802 991 B1**

(12) **EUROPEAN PATENT SPECIFICATION**

(45) Date of publication and mention
of the grant of the patent:
**28.03.2012 Bulletin 2012/13**

(51) Int Cl.:
$G01S\ 19/05$ (2010.01)   $G01S\ 19/51$ (2010.01)
$G01S\ 19/44$ (2010.01)   $G01S\ 19/04$ (2010.01)

(21) Application number: **04769692.7**

(22) Date of filing: **21.10.2004**

(86) International application number:
**PCT/IB2004/003446**

(87) International publication number:
**WO 2006/043123 (27.04.2006 Gazette 2006/17)**

(54) **SATELLITE BASED POSITIONING**

POSITIONSBESTIMMUNG AUF SATELLITENBASIS

LOCALISATION PAR SATELLITE

(84) Designated Contracting States:
**AT BE BG CH CY CZ DE DK EE ES FI FR GB GR HU IE IT LI LU MC NL PL PT RO SE SI SK TR**

(43) Date of publication of application:
**04.07.2007 Bulletin 2007/27**

(60) Divisional application:
**08105822.4 / 2 026 085**

(73) Proprietor: **Nokia Corporation**
**02150 Espoo (FI)**

(72) Inventors:
• **SAIRO, Hanna**
**FIN-33900 Tampere (FI)**

• **SYRJÄRINNE, Jari**
**FIN-33700 Tampere (FI)**

(74) Representative: **Cohausz & Florack**
**Patent- und Rechtsanwälte**
**Partnerschaftsgesellschaft**
**Bleichstraße 14**
**40211 Düsseldorf (DE)**

(56) References cited:
EP-A- 1 148 754      EP-A- 1 235 076
WO-A-02/25309       WO-A-97/21109
US-A- 5 952 959      US-A- 6 043 777
US-A1- 2002 024 461   US-A1- 2003 119 529
US-A1- 2003 154 026   US-B1- 6 229 479
US-B1- 6 236 356      US-B1- 6 373 430

**Description**

FIELD OF THE INVENTION

The invention relates to a satellite based positioning.

BACKGROUND OF THE INVENTION

Currently there are two operating satellite based positioning systems, the American system GPS (Global Positioning System) and the Russian system GLONASS (Global Orbiting Navigation Satellite System). In the future, there will be moreover a European system called GALILEO. A general term for these systems is GNSS (Global Navigation Satellite System).

The constellation in GPS for example, consists of more than 20 satellites that orbit the earth. Each of the satellites transmits two carrier signals L1 and L2. One of these carrier signals L1 is employed for carrying a navigation message and code signals of a standard positioning service (SPS). The L1 carrier phase is modulated by each satellite with a different C/A (Coarse Acquisition) code. Thus, different channels are obtained for the transmission by the different satellites. The C/A code is a pseudo random noise (PRN) code, which is spreading the spectrum over a 1 MHz bandwidth. It is repeated every 1023 bits, the epoch of the code being 1 ms. The carrier frequency of the L1 signal is further modulated with navigation information at a bit rate of 50 bit/s. The navigation information comprises in particular ephemeris and almanac parameters. Ephemeris parameters describe short sections of the orbit of the respective satellite. Based on these ephemeris parameters, an algorithm can estimate the position of the satellite for any time while the satellite is in the respective described section. The almanac parameters are similar, but coarser orbit parameters, which are valid for a longer time than the ephemeris parameters.

A GPS receiver of which the position is to be determined receives the signals transmitted by the currently available satellites, and it detects and tracks the channels used by different satellites based on the different comprised C/A codes. Then, the receiver determines the time of transmission of the code transmitted by each satellite, usually based on data in the decoded navigation messages and on counts of epochs and chips of the C/A codes. The time of transmission and the measured time of arrival of a signal at the receiver allow determining the time of flight required by the signal to propagate from the satellite to the receiver. By multiplying this time of flight with the speed of light, it is converted to the distance, or range, between the receiver and the respective satellite.

The computed distances and the estimated positions of the satellites then permit a calculation of the current position of the receiver, since the receiver is located at an intersection of the ranges from a set of satellites.

Similarly, it is the general idea of GNSS positioning to receive satellite signals at a receiver which is to be positioned, to measure the time it took the signals to propagate from an estimated satellite position to the receiver, to calculate therefrom the distance between the receiver and the respective satellite and further the current position of the receiver, making use in addition of the estimated positions of the satellites.

Usually, a PRN signal which has been used for modulating a carrier signal is evaluated for positioning, as described above for GPS. The accuracy of such a positioning lies typically between 5 meters and 100 meters.

In an alternative approach known as Real Time Kinematics (RTK), the phase of the carrier signal is evaluated for supporting a relative positioning between two receivers. One of the receivers is a user receiver which is to be positioned, while the other receiver is a reference receiver arranged at a known location. The location of the reference receiver is known very precisely. A positioning based on the phase of the carrier signal is in fact a relative positioning between these two receivers. It is based on both, carrier measurements and PRN code measurements, which are used to form double difference observables. A double difference observable relating to the carrier phase is the difference in the carrier phase of a specific satellite signal at both receivers compared to the difference in the carrier phase of another satellite signal at both receivers. A double difference observable relating to the PRN code is obtained correspondingly. Different errors in the satellite signals, for example errors due to noise levels, atmospheric distortions, a multipath environment and satellite geometry, are cancelled out when considering only difference values for two receivers and different satellites. The double difference observables can then be employed for determining the position of the receivers relative to each other. The determined relative position can further be converted into an absolute position, since the location of the reference position is accurately known. Evaluating the carrier phase requires computationally challenging tasks to be accomplished, but it enables a positioning with an accuracy on a centimeter or decimeter level.

While many error sources are cancelled out when forming double differences, integer ambiguities remain in the carrier phase observables. Resolving these ambiguities is the most computationally burdening and time-consuming task in the described carrier phase based positioning when used with single-frequency receivers. The described carrier phase based positioning can be accelerated significantly by evaluating signals with different carrier frequencies, for example L1 and L2 in GPS, since using multiple frequencies decreases the computational load related to the carrier phase based positioning.

Originally, such a carrier phase based positioning has been used primarily by geodetic users, who are often equipped with two-frequency receivers. Users who employ a GNSS positioning for personal use, however, have mostly only single-frequency receivers available.

A relative positioning of GNSS receivers making use of double difference observables has been described for example in U.S. patent 6,229,479 B1.

US patent application 2002/024461 A1 presents a system in which two location servers are coupled to a communication network. Moreover, five GPS reference stations are coupled to the communication network. Each GPS reference station provides pseudorange correction data to the communication network and the raw navigation data message which is used by the location servers. The first location server receives pseudoranges from a first mobile GPS receiver and determines a position of the first mobile GPS receiver from satellite ephemeris data received from the network and from pseudoranges originating from the first mobile GPS receiver. In situations where high data processing demands may be placed on a particular location server due to the dense population in a region covered by the location server, several location servers may be deployed in this region in addition to redundant location servers.

SUMMARY OF THE INVENTION

The invention extends the usability of relative positioning.

A positioning server, a positioning server network comprising a plurality of positioning servers, a method and a software code are presented as defined in the appended claims.

A communication may be realized in each positioning server for instance by a processing component running a positioning support software. Such a processing component may also be realized as a dedicated module.

The invention is based on the consideration that a positioning server may be limited with regard to its computational power, with regard to its coverage area and partly with regards to its facilities. It is therefore proposed that several positioning servers are connected to each other in a network, in which they may exchange information.

It is an advantage of the invention that a positioning server network enables a co-operation between positioning servers in many ways.

In one embodiment of the invention, each of the positioning servers of the network is adapted to perform positioning calculations for respectively connected assemblies based on information on satellite signals received by the assemblies. The limits of the computational power of a positioning server may be reached when it has to carry out position computations for many assemblies simultaneously. Therefore, at least one of the positioning servers is moreover adapted to perform as well at least a part of positioning calculations for assemblies connected to at least one other of the positioning servers. Thus, the positioning servers may share their computational load in case one of the positioning servers is loaded more than one of the other positioning servers.

In another embodiment of the invention, the positioning servers of the network are adapted to exchange among each other information on satellite signals received by assemblies connected to at least one of the positioning servers. Thus, assemblies connected to one of the positioning servers can be made visible to other positioning servers. As a result, assemblies connected to different positioning servers can position each other. Thus, the availability of a relative positioning is increased.

In another embodiment of the invention, the absolute position of at least one of the positioning servers of the network is available. Further, at least some of the positioning servers are adapted to receive signals from at least one satellite of a GNSS. If an absolute position of the positioning server to which an assembly is connected directly is not known, the assembly may thus request an absolute positioning from another positioning server of the network making use of determined relative positions between the positioning servers. This embodiment therefore makes absolute positioning more widely available.

Further, a system is proposed which comprises a positioning server network according to the invention and at least one assembly. The assembly is adapted to receive signals from at least one satellite of a GNSS and to establish a communication link with a positioning server of the positioning server network.

Embodiments of the method may comprise steps which correspond to the functions of the features of one or more of the presented embodiments of a positioning server according to the invention.

Embodiments of the software code may realize steps which correspond to the functions of the features of one or more of the presented embodiments of a positioning server according to the invention.

An assembly can be either a stationary unit or a mobile unit. A wireless communication module can be for instance a cellular engine or terminal, or a WLAN engine or terminal, etc. A cellular terminal can be a cellular phone or any other type of cellular terminal, like a laptop which comprises means for establishing a link via a cellular network.

It is to be understood that any of the proposed software codes may be stored in a software program product.

The communication between any of the mentioned positioning servers and an assembly may be carried out using any type of wireless connection, for instance a data call connection, a GPRS connection or some other packet switched connection, an SMS connection, an MMS connection or a WLAN connection.

Beside the enabled absolute positioning, also the enabled relative positioning can be made use of in a great variety of situations. It can be employed, for example, for searching or locating a child or a friend in a crowd, etc. It can further be employed for locating a piece of equipment, like a car in a parking lot. It can further be employed for a close follow-up of a friend, of an athlete, of a competitor, or of a child, etc. For example, the route of a followed assembly can be made visible to a following mobile user on a display. The relative positioning can further be employed for measuring distances while planning constructions or building constructions, etc.

If the distance between two assemblies is known, users may also utilize this information to aid creation of position information. This applies especially in the case where the distance between two or more assemblies is zero or very close to zero.

In addition to precise distance measurements, the proposed relative positioning can be used to produce various other position related information as well. Such information may include for example precise direction measurements. For instance, azimuth and elevation angles to satellites can be determined precisely and be used for direction measurements. Other useful information includes angular velocity measurements, differential distance measurements, relative velocity measurements and absolute velocity measurements, in case one of the involved GNSS receivers is stationary. In addition, the enabled positioning can be used in an estimation of intersection points of trajectories, or in an estimation of time of collision or time of encounter of two assemblies.

An assembly may comprise for instance a software code which is adapted to estimate an absolute velocity of the assembly and/or of at least one other assembly, a relative velocity between the assembly and at least one other assembly, an angular velocity between the assembly and at least one other assembly, a trajectory of the assembly and/or at least one other assembly, a trajectory between the assembly and at least one other assembly, a time of encounter of the assembly and at least one other assembly, a location of encounter of the assembly and at least one other assembly, and/or a direction of motion of the assembly and/or at least one other assembly. The estimations can be presented for instance via a user interface to a user of the assembly, optionally in combination with a map, etc., or be used for some other purpose.

BRIEF DESCRIPTION OF THE FIGURES

Other objects and features of the present invention will become apparent from the following detailed description considered in conjunction with the accompanying drawings.

Fig. 1      is a schematic diagram of a system in accordance with an embodiment of the invention;

Fig. 2      is a flow chart illustrating a determination of a relative position in the system of Figure 1;

Fig. 3      is a schematic diagram illustrating a first option for forming a mobile unit in the system of Figure 1;

Fig. 4      is a schematic diagram illustrating a second option for forming a mobile unit in the system of Figure 1;

Fig. 5      is a schematic diagram illustrating a third option for forming a mobile unit in the system of Figure 1;

Fig. 6      is a schematic diagram illustrating a fourth option for forming a mobile unit in the system of Figure 1;

Fig. 7      is a schematic block diagram illustrating an API in a mobile unit in the system of Figure 1;

Fig. 8      is a schematic diagram illustrating a first approach of storing measurement data in a memory in the system of Figure 1;

Fig. 9      is a schematic diagram illustrating a second approach of storing measurement data in a memory in the system of Figure 1;

Fig. 10     is a schematic diagram illustrating a third approach of storing measurement data in a memory in the system of Figure 1;

Fig. 11     is a flow chart illustrating the use of a user interface in the system of Figure 1;

Fig. 12     is a schematic diagram illustrating a positioning point on a mobile unit in the system of Figure 1;

Fig. 13     is a schematic block diagram illustrating the use of a server for enabling a data exchange between mobile units in the system of Figure 1;

Fig. 14    is a schematic block diagram illustrating the use of a server providing computation capacities in the system of Figure 1;

Fig. 15    is a schematic diagram comparing absolute and relative positioning;

Fig. 16    is a schematic block diagram illustrating a support of an absolute positioning in the system of Figure 1;

Fig. 17    is a schematic block diagram illustrating the use of a network of servers for a positioning in the system of Figure 1; and

Fig. 18    is a schematic block diagram illustrating a chained determination of an absolute position in the system of Figure 1.

DETAILED DESCRIPTION OF THE INVENTION

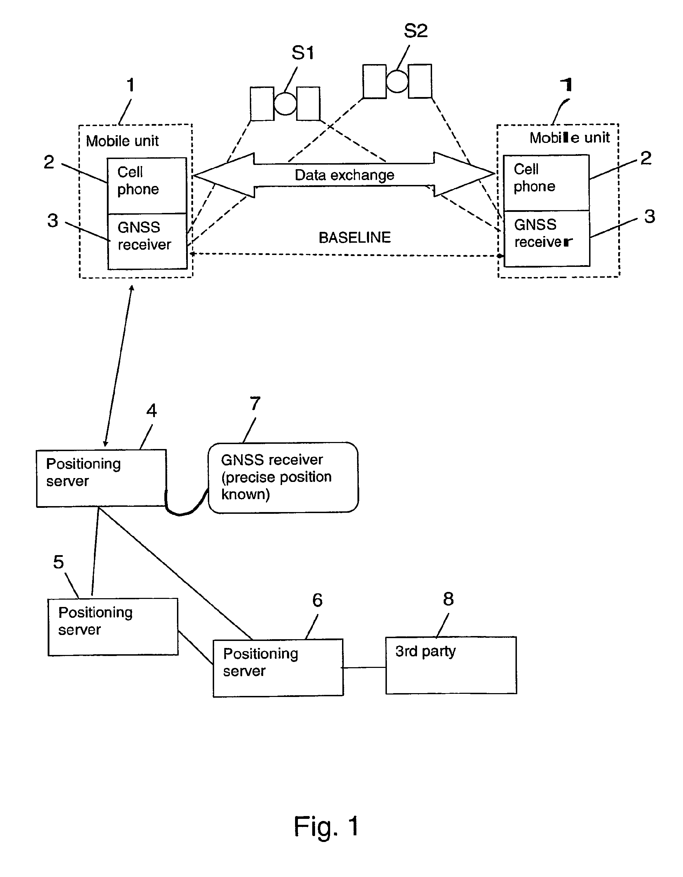

Figure 1 presents an overview over a system in which the invention may be implemented by way of example. The system allows determining at least the relative position of a mobile unit.

The system comprises a plurality of mobile units 1, two of which are depicted in Figure 1. Each mobile unit 1 includes a cellular phone 2 and a GNSS receiver 3 coupled to each other. The GNSS receiver 3 is able to receive signals which are transmitted by satellites S1, S2 belonging to one or more GNSSs, like GPS and GALILEO. The GNSS receivers 3 of two mobile units 1 are spaced apart, for example, by 10 km. It is to be understood that also much larger distances are possible, like for instance 100 km, but the performance of a relative positioning can be expected to be the better, the shorter the distance. The distance is indicated in Figure 1 by a dashed baseline between the GNSS receivers 3. The cellular phones 2 of different mobile units 1 are able to communicate with each other using a cellular link or a non-cellular link.

The system moreover comprises a plurality of positioning servers 4, 5, 6 interconnected with each other. At least one of the mobile units 1 is able to access at least one of the servers 4. One of the servers 4 is linked in addition to a stationary GNSS receiver 7, which is arranged at a known location. Further, a third party device 8 may be coupled to one of the servers 6.

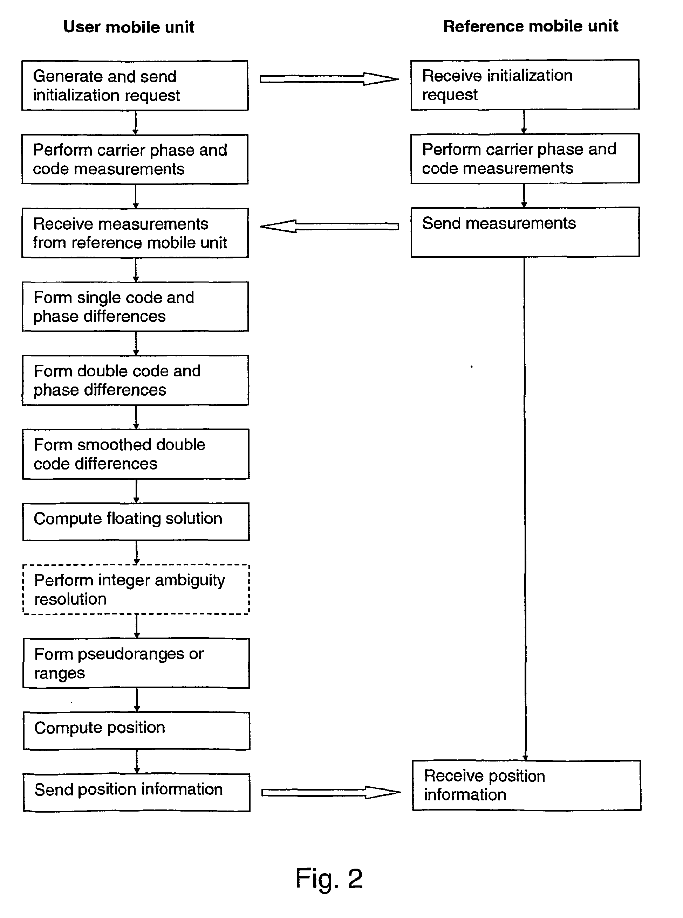

Different aspects of the invention which may be implemented in the system will now be described with reference to Figures 2 to 18.

Figure 2 is a flow chart illustrating an exemplary relative positioning of a mobile unit 1 in the system of Figure 1.

It is assumed that the relative position of a first mobile unit 1 compared to a second mobile unit 1 is to be determined. The operation of the first mobile unit, referred to as a user mobile unit, is presented on the left hand side of Figure 2. The operation of the second mobile unit, referred to as a reference mobile unit, is presented on the right hand side of Figure 2.

First, the user mobile unit generates and transmits an initialization request to the reference mobile unit. The request is received by the reference mobile unit.

The GNSS receivers 3 of both mobile units operate as normal GNSS receivers. That is, they acquire, track and decode satellite signals. Further, they are able to compute a stand-alone position in a known manner.

When an initialization request is transmitted, the GNSS receivers 3 of both mobile units moreover carry out code measurements and carrier phase measurements. These measurements are carried out at both mobile units for signals from at least two different satellites S1, S2.

The code measurements and the carrier phase measurements of the two mobile units must be aligned. That is, the measurements made at the user mobile unit at a particular time instant have to be aligned with the measurements made at the reference mobile unit at the same time instant. If this is not possible, then the measurements made at a specific time instant at one of the receivers must be extrapolated or interpolated, in order to synchronize them with the measurements of the other receiver.

The reference mobile unit sends the measurement results to the user mobile unit. The user mobile unit receives these measurement results and aligns them with its own measurement results. The aligned results are then used by the user mobile unit for forming new observables of the carrier and code measurements.

The user mobile unit forms to this end for each satellite signal single differences (SD) between the two mobile units. The single difference for the carrier phase of a particular satellite Sj is the difference between the carrier phase of the satellite Sj measured by the GNSS receiver 3 of the reference mobile unit and the carrier phase of the satellite Sj measured by the GNSS receiver 3 of the user mobile unit. Similarly, the single difference for the code of a particular satellite Sj is the difference between the code of the satellite Sj measured by the GNSS receiver 3 of the reference mobile unit and the code of the satellite Sj measured by the GNSS receiver 3 of the user mobile unit. Both can be summarized as follows:

$$SD(j) = signal\ (Sj \rightarrow GNSS\ receiver\ of\ user\ mobile\ unit)\ -$$
$$signal\ (Sj \rightarrow GNSS\ receiver\ of\ reference\ mobile\ unit)$$

where SD(j) is the single difference for carrier phase or code for a particular satellite Sj. In the example of Figure 1, j may assume the values 1 and 2.

Next, the user mobile unit forms double differences (DD) for code and carrier phase, respectively, by subtracting the single differences determined for different satellites Si, Sj from each other. This can be summarized as follows:

$$DD = SD(j) - SD(i)$$
$$= [signal\ (Sj \rightarrow GNSS\ receiver\ of\ user\ mobile\ unit)\ -\ signal$$
$$(Sj \rightarrow GNSS\ receiver\ of\ reference\ mobile\ unit)]\ -\ [signal$$
$$(Si \rightarrow GNSS\ receiver\ of\ user\ mobile\ unit)\ -\ signal\ (Si \rightarrow GNSS$$
$$receiver\ of\ reference\ mobile\ unit)],$$

where DD is the double difference for carrier phase or code for a particular pair of satellites Si and Sj. In the example of Figure 1, j may be equal to 1 and i equal to 2.

The double differences are then used to produce smoothed code measurements as known in the art.

Next, a floating solution is computed in a known manner. The floating solution can be further processed in an integer ambiguity resolution in a known manner. When ambiguities have been solved, a very accurate relative positioning can be performed. As ambiguity resolution is a time-consuming task, however, the floating solution may also be used directly. Therefore the step of performing an integer ambiguity resolution is indicated only with dashed lines in Figure 2. The accuracy which can be achieved using the floating solution is approximately 30 to 60 cm, while the accuracy which can be achieved with a successful additional integer ambiguity resolution is on a centimeter level.

The processing results can then be used to form pseudoranges or ranges and to compute therefrom the relative position of the user mobile unit in a known manner. The position information may finally be transmitted to and received by the reference mobile unit. It is to be understood that the positioning could be expanded to more than two mobile units. In addition, signals originating from the same satellite but using different frequencies could be evaluated. Further, signals from more than two satellites could be evaluated.

The described transmissions between the user mobile unit and the reference mobile unit can make use of various communication links.

A non-cellular link, like a wireless LAN connection, a Bluetooth™ connection, a UWB connection or an infrared connection, could be used for example whenever possible. Whenever such a connection is problematic in a particular environment, a cellular link could be used instead. A cellular link relies on a regular connection between the cellular phones 2 of the mobile units 1 via a cellular communication network (not shown). A cellular link may make use, for example, of a data call connection, of a GPRS connection, in which the positioning data is inserted into data packages, of an SMS connection, of an MMS connection, or of a connection via a control channel. If more than two mobile units 1 are involved, also different types of links may be used between different mobile units.

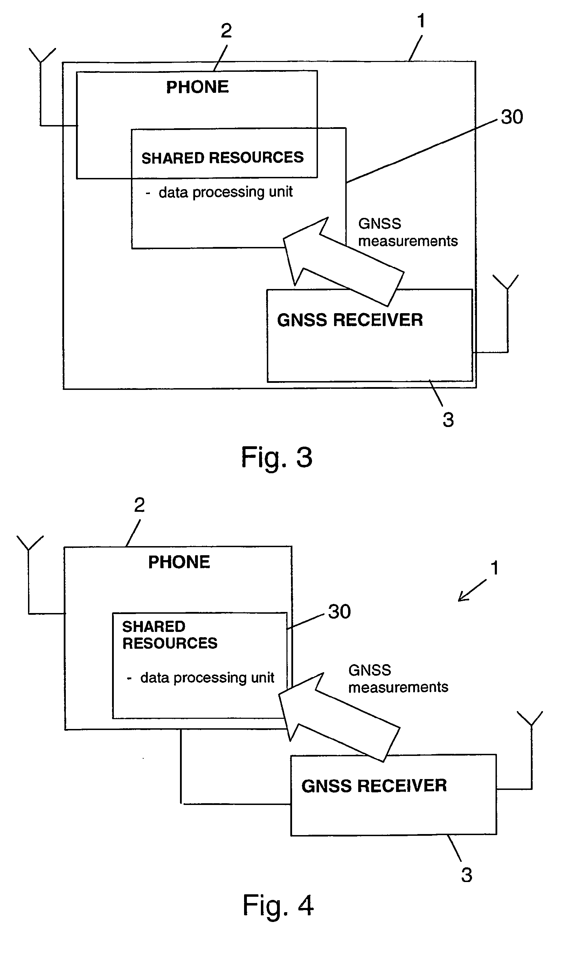

It has already been mentioned that the cellular phone 2 and the GNSS receiver 3 of a respective mobile unit 1 are coupled to each other. This can be achieved in various ways. Four different embodiments are presented in Figures 3 to 6.

As illustrated in Figure 3, the mobile unit 1 can be a single device in which the cellular phone 2 and the GNSS receiver 3 are integrated. The cellular phone 2 and the GNSS receiver 3 may moreover rely on shared resources 30 for the positioning, in particular on a shared data processing unit. The shared resources 30 may be resources included anyhow for the cellular phone, possibly adapted for positioning purposes, or resources provided specifically for positioning purposes. The GNSS receiver 3 will then provide GNSS measurement results to the shared resources 30 for processing. It is to be understood, however, that some data or signal processing has to be enabled in the GNSS receiver 3 nevertheless, if the GNSS receiver 3 is to operate as well as a conventional GNSS receiver.

As illustrated in Figure 4, the cellular phone 2 and the GNSS receiver 3 can equally be realized as separate devices. The GNSS receiver 3 could be realized for example as accessory device for the cellular phone 2. The GNSS receiver 3 is then coupled to the cellular phone 2 by some communication link. The communication link may be for instance a fixed cable, a Bluetooth™ connection, an infrared connection or an ultra wideband connection. Also in this case, the cellular phone 2 and the GNSS receiver 3 may employ shared resources 30 for the positioning. The shared resources can be in particular arranged in the cellular phone 2, to which the GNSS receiver 3 provides GNSS measurement results.

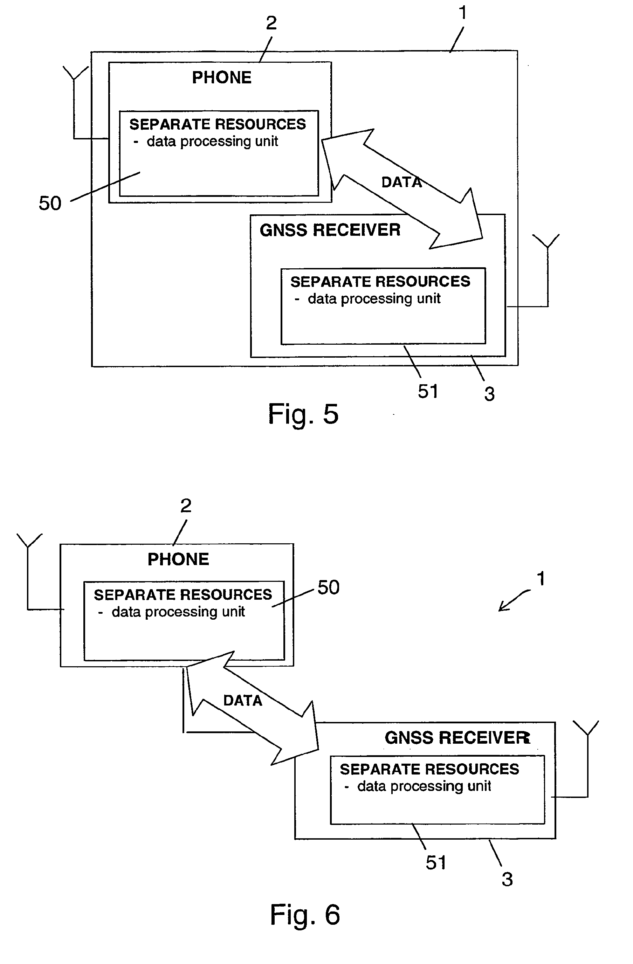

Figure 5 illustrates again a mobile unit 1 in which the cellular phone 2 and the GNSS receiver 3 are integrated into a single device. In this case, however, the cellular phone 2 and the GNSS receiver 3 comprise separate resources 50, 51 for the positioning, in particular separate data processing units. The separate resources 50, 51 my exchange processed data and commands, not exclusively measurement results.

Figure 6, finally, depicts again a cellular phone 2 and a GNSS receiver 3 as separate devices. Similarly as in Figure 4, the cellular phone 2 and the GNSS receiver 3 comprise separate resources 50, 51 for the positioning, which exchange processed data and commands among each other.

It has to be noted that the mobile units 1 of the system of Figure 1 do not have to be realized all in the same way.

Within the mobile unit 1, the cellular phone 2 has to communicate with the GNSS receiver 3.

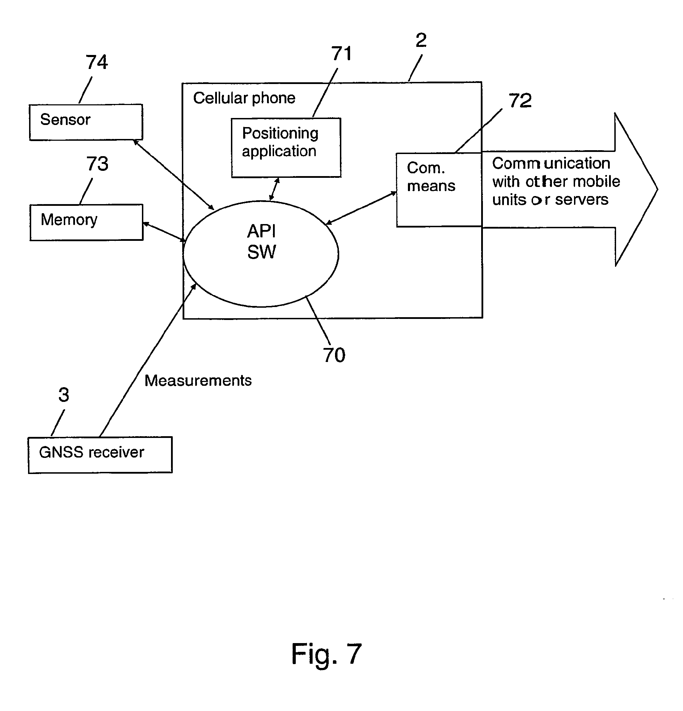

Figure 7 is a block diagram presenting an exemplary embodiment of the invention in which such a communication is enabled by a specific application program interface API.

In Figure 7, the cellular phone 2 of a mobile unit 1 comprises an API 70 realized in software. The API 70 is the interface of a positioning application 71 running in the cellular phone 2. Both applications 70, 71 may be run for example by a separate processing component 50 of the cellular phone 2. The positioning application 71 may realize for instance the computations described with reference to Figure 2. The cellular phone 2 moreover comprises communication means 72. The communication means 72 may comprise in particular a transmitter and a

receiver enabling a communication via a cellular communication network. Further, it may comprise for instance an Infrared Transceiver, a Bluetooth™ transceiver, etc. Figure 7 presents in addition the GNSS receiver 3 of the same mobile unit 1, a memory 73 and a sensor 74. The sensor 74 can be for instance a barometer.

When the GNSS receiver 3 sends positioning related measurements in a specific format, for instance in RTCM format, to the cellular phone 2, the cellular phone 2 receives the messages and parses them using the API 70.

In addition, the API 70 enables the cellular phone 2 sending data via a cellular or a non-cellular connection to a positioning server 4, 5, 6 and/or to one or more other mobile units 1, making use of the communication means 72. Such data may comprise assistance data created by the positioning application 71 based on measurement data provided by the GNSS receiver 3. Further, the API 70 enables the cellular phone 2 receiving data from other mobile units 1 or from a positioning server 4, 5, 6 via a cellular or a non-cellular connection making use of the communication means 72. The API 70 may also enable receipt of measurement data from the sensor 74. Measurements by a barometer, for instance, provide an indication on the current altitude of the mobile unit 1, which can be used for aiding position computations by the positioning application 71. Moreover, the API 70 allows controlling position computations by the positioning application 71 and controlling a measurement memory 73.

The measurement memory 73 can be for instance part of the memory of the cellular phone 2. Alternatively, it can be part of a removable media like a memory card which can be flexibly inserted into the phone 2 and extracted again. Further alternatively, the measurement memory can be part of the GNSS receiver 3.

A measurement memory 73 can be used to store positioning related messages and/or positioning related data. Measurement results can also be stored to the memory 73 before any position information has been created in the cellular phone 2 and even before a positioning has been activated upon a request from the user or from a third party. This ensures that measurement results are already available when a positioning is activated. Using measurement results from past time instants for creating position information is also referred to as back tracking. In order to be able to perform a relative positioning, measurement results from two or more GNSS receivers 3 have to be aligned in time or synchronized, which may require extrapolation of measurement results or other adjustments of measurement results. This is facilitated when measurement results are stored beforehand in a memory which functions as a measurement buffer.

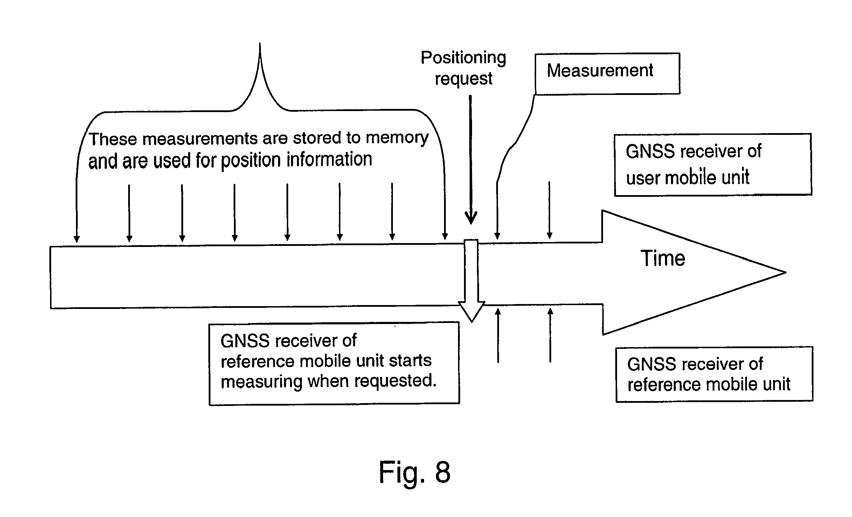

Figures 8 to 10 are diagrams illustrating by way of example various back tracking possibilities.

In the approach represented in Figure 8, the GNSS receiver 3 of a user mobile unit performs code and carrier phase measurements at regular intervals which are stored in a measurement memory 73. When a positioning is activated at a user mobile unit, an initialization request is transmitted to a reference mobile unit. Thereupon, also the GNSS receiver 3 of the reference mobile unit starts code and carrier phase measurements. When the user mobile unit receives measurement data from the reference mobile unit, these are aligned with the measurement data stored in the memory 73. Both sets of measurement data are then used for creating position information as described with reference to Figure 2.

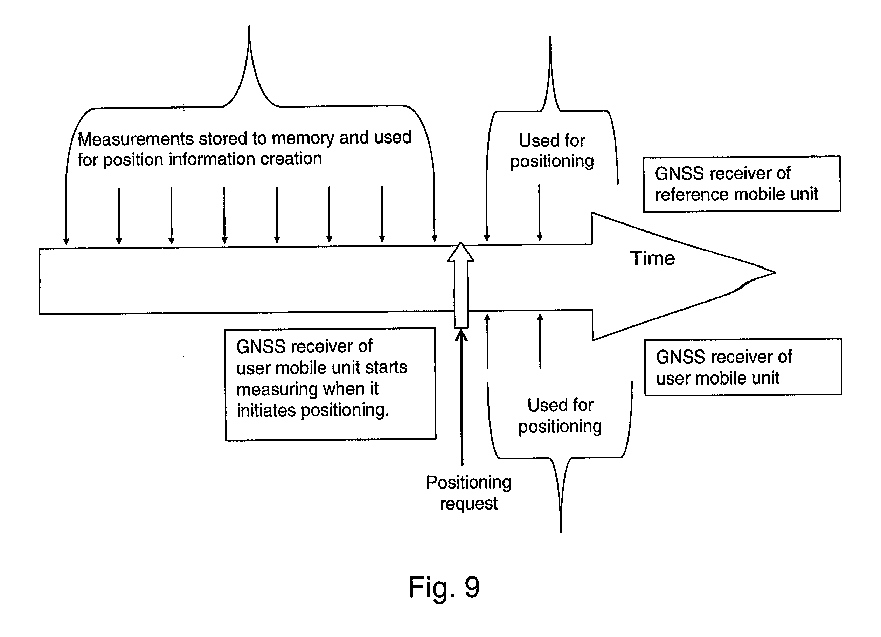

In the approach represented in Figure 9, the GNSS receiver 3 of a reference mobile unit 1 performs code and carrier phase measurements at regular intervals which are stored in a measurement memory 73. When a positioning is activated at a user mobile unit, an initialization request is transmitted to the reference mobile unit. At the same time, the GNSS receiver 3 of the user mobile unit starts code and carrier phase measurements. When receiving the initialization request, the reference mobile unit transfers stored measurement data and newly measurement data to the user mobile unit. The user mobile unit then uses the received measurement data and the own measurement data for creating position information as described with reference to Figure 2.

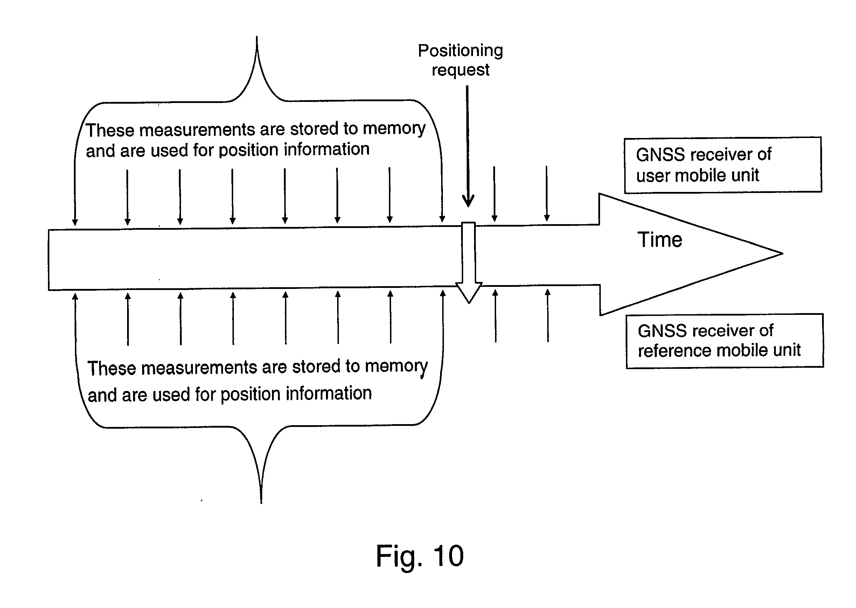

In the approach represented in Figure 10, the GNSS receiver 3 of a user mobile unit performs code and carrier phase measurements at regular intervals which are stored in a measurement memory 73. In addition, a GNSS receiver 3 of some reference mobile unit performs code and carrier phase measurements at regular intervals which are stored in a measurement memory. When a positioning is activated at the user mobile unit, an initialization request is transmitted to the reference mobile unit. Thereupon, the reference mobile unit transmits the stored measurement data to the user mobile unit. When the user mobile unit receives measurement data from the reference mobile unit, these are aligned with the measurement data stored in the memory 73 of the user mobile unit. Both sets of measurement data are then used for creating position information as described with reference to Figure 2.

The positioning of a mobile unit 1 may be activated and/or controlled, for instance, by a user of the user mobile unit by means of a user interface UI of the mobile unit.

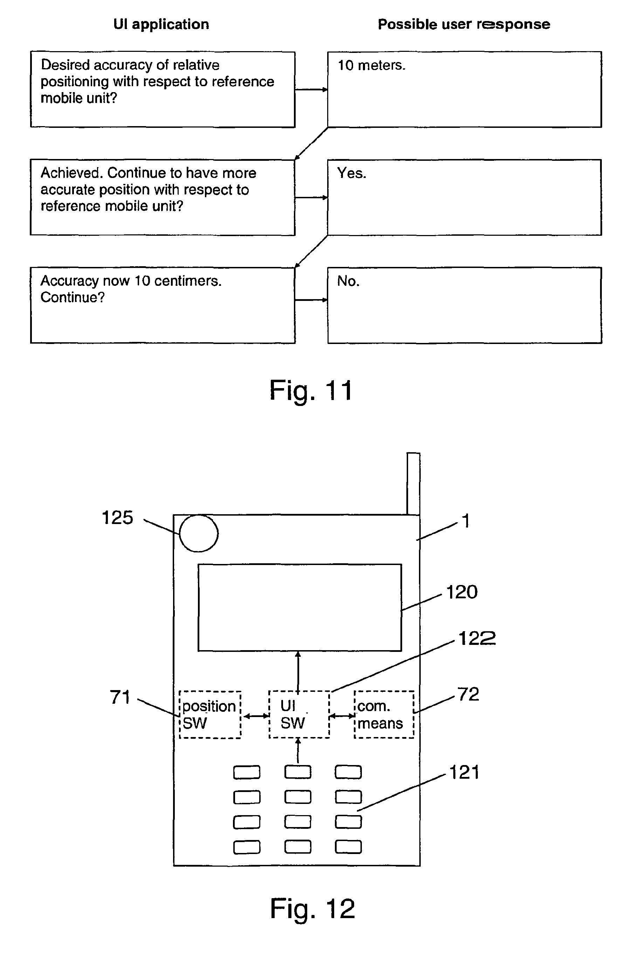

Figure 11 is a flow chart illustrating an exemplary dialogue between such a user interface and a user concerning the accuracy of a relative positioning. On the left hand side, options presented by the user interface on a display of the mobile unit are presented, while on the right hand side, possible selections by a user are indicated.

Before initializing the positioning, the user interface may inquire from the user the desired accuracy of the relative positioning. The user may select by way of example an accuracy of 10 m. When this accuracy is achieved, the user interface informs the user that the desired accuracy of 10 m has been achieved and inquires from the user whether a more accurate relative position is now to be determined. The user may now request by way of example a more accurate relative position. When a higher accuracy has been achieved, the user interface informs the user about the achieved accuracy, for example an accuracy of 10 cm. Further, the user interface inquires from the user whether a still more accurate relative position is to be determined. The user may now decline by way of example a more accurate positioning, and the positioning is terminated. By selecting the accuracy, the user may influence for instance the time which is required for the positioning.

The accuracy of a positioning can be varied by the mobile unit 1 for example by varying the number of considered frequencies, by varying the number of reference mobile units 1, by using or neglecting an integer ambiguity resolution, etc.

By means of the user interface, a user may thus set a desired accuracy level, for example a centimeter level, a decimeter level or an N-meter level, where N is a selectable integer number. Alternatively or in addition, a user may set the time that is to be used for the positioning, for instance a minimum, a maximum and a default time period. Further, the user may be enabled to define preferred actions which are to be carried out if the pre-set time is exceeded, or if a pre-set or a selected accuracy cannot be achieved. Once the desired accuracy level is achieved, the user interface may query whether the user wishes to continue to have a greater level of accuracy, as in the example of Figure 11.

Further user control options which may be supported by the user interface of a mobile unit 1 comprise, for example, requesting a relative positioning from a positioning server 4 or from at least one other mobile unit 1, showing a map or maps on a display of the cellular phone 2, locating the mobile unit 1 on a map which can be viewed on the display, downloading maps, downloading applications and data which can utilize relative positioning, downloading updates to a mobile positioning software, either for the cellular phone 2 or for the GNSS receiver 3, marking points of interests (POIs) on the display, marking the position of other mobile units 1 on the display, marking routes of the mobile unit 1 and routes of other mobile units 1 on the display as a part of a tracking functionality, downloading, using, and creating navigation directions like guiding directions, downloading and using other positioning applications, etc.

The user interface may also enable a user of a reference mobile unit to define different privacy settings. The user of a reference mobile unit can define, for example, to whom his/her relative position should be visible. In practice, this can be realized, for instance, by defining some other users as "friendly users". A "friendly user" does not have to ask permission to know the position of the reference mobile unit but is provided automatically with GNSS measurement results. If another user requesting GNSS measurement data is not a "friendly user", permission has to be asked from the user whose position is requested. This permission can be asked for via a communication connection and it can be shown on the display of the cellular phone 2 of the reference mobile unit. Certain users could also be defined to be "rejected users" to whom the position is not to be delivered in any case. Thereby, the user does not have to be bothered with their inquiries.

Figure 12 is a schematic diagram illustrating an exemplary integration of the user interface in a mobile unit 1.

The mobile unit 1 comprises a display 120 and a key pad 121 as a part of a cellular phone 2. Further, it comprises a UI application 122 receiving an input via the keypad 121 and presenting information and options via the display 120. The UI application 122 may be realized by a software running, for example, in shared or separate resources 30, 50 of the cellular phone 2. The UI application 122 is further able to provide commands to a positioning application 71 running in shared or separate resources 30, 50, 51, and to communicate with other devices via communication means 72 of the cellular phone 2. These communication means 72 may be the same as those used for the communication between a user mobile unit and a reference mobile unit described with reference to Figure 2. The communication means 72 may also enable cellular and/or non-cellular links of the same types as presented for the communication between a user mobile unit and a reference mobile unit.

An additional external part 125 of the user interface is given by a simple presentation of a physical point on the mobile unit 1, which represents the exact portion of the mobile unit 1 which is positioned based on the GNSS measurements. This information is of importance for a positioning which has an accuracy on a centimeter level.

While Figures 2 to 12 relate to embodiments of the mobile units 1 of the system of Figure 1, Figures 13 to 18 relate to the possible interaction of mobile units 1 with one or more positioning servers 4, 5, 6 of the system of Figure 1. It has to be noted, however, that an interaction with such positioning servers is not required for the proposed positioning but enables additional options.

As mentioned above, the mobile units 1 can communicate directly with each other using a cellular or a non-cellular link.

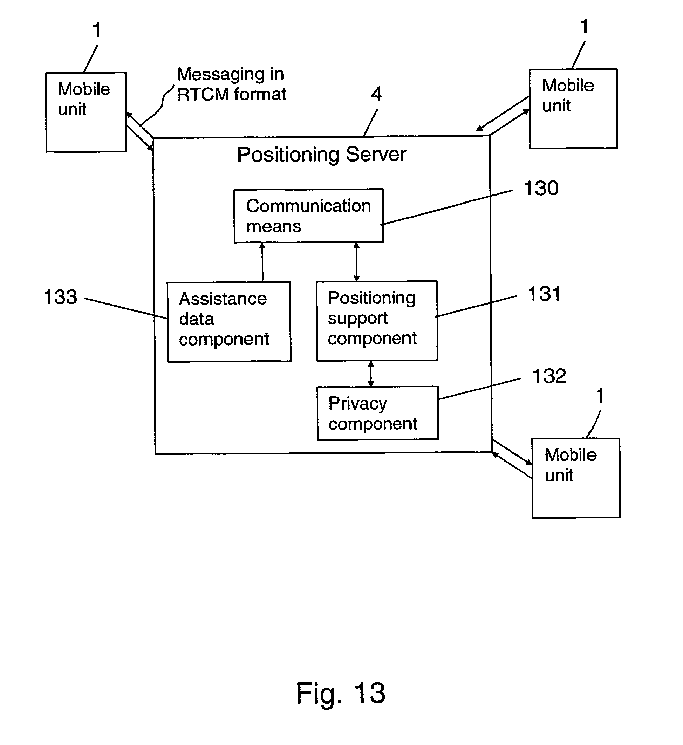

Figure 13 is a block diagram presenting an exemplary alternative embodiment, in which each mobile unit 1 only has to establish a connection with a positioning server 4 for exchanging measurement data.

The positioning server 4 comprises communication means 130 which enable a communication with a plurality of mobile units 1, for example in form of a data call connection, a GPRS connection, an SMS connection, an MMS connection or a WLAN connection. Each of the mobile units 1 comprises corresponding communication means. In addition, the positioning server 4 comprises a positioning support component 131, a privacy check component 132 and an assistance data component 133. Each of these components 131, 132, 133 comprises at least a software running in a processing unit of the server 4.

When a user mobile unit 1 is interested in participating in a positioning, it notifies the positioning server 4 and provides its location. The positioning server 4 responds with an acknowledgement message. The mobile unit 1 sends thereupon GNSS measurement data to the positioning server 4, for example in RTCM format. The positioning server 4 then forwards GNSS measurement data from other mobile units 1 to the user mobile unit 1. Any data exchange is carried out in the positioning server 4 via its communication means 130 and any positioning related processing is carried out by the positioning support component 131. Upon receipt of GNSS measurement data from other mobile units 1 via the positioning server 4, the user mobile unit 1 performs the computations described with reference to Figure 2 in order to determine its relative position.

The determined position information can then be delivered by the user mobile unit 1 to the positioning server 4, which forwards the position information to other involved mobile units 1 which do not perform position calculations themselves. Alternatively, the user mobile unit 1 may send the determined position information as well directly to another mobile unit 1. Some mobile units 1 may thus be passive mobile units 1 which only provide GNSS measurement data but which do not carry out any relative positioning computations themselves.

The privacy component 132 is provided, because the positioning server 4 delivers confidential information between the mobile units 1. The privacy component 132 comprises in addition to a software a storage space. In this storage space, it stores for each mobile unit 1 a "friendly user" list and a "rejected user" list. These lists are made use of by the positioning support component 131 of the positioning server 4 similarly as described above for corresponding lists stored by a mobile unit 1. A mobile unit 1 can provide a positioning server 4 via the communication means 130 with privacy data as a part of the messages transmitted for positioning, as a dedicated privacy message and/or upon request by the positioning server 4. The privacy component 132 is addressed thereupon for instance by the positioning support component 130 receiving this privacy data.

The assistance data component 133 generates assistance data including for instance ephemeris and almanac data of a GPS system, reference time, reference position or satellite integrity information, and provides it upon request to a mobile unit 1 via the communication means 130. A mobile unit 1 may make use of such information in normal satellite positioning. Alternatively, mobile units 1 might create assistance data and provide it to the positioning server 4.

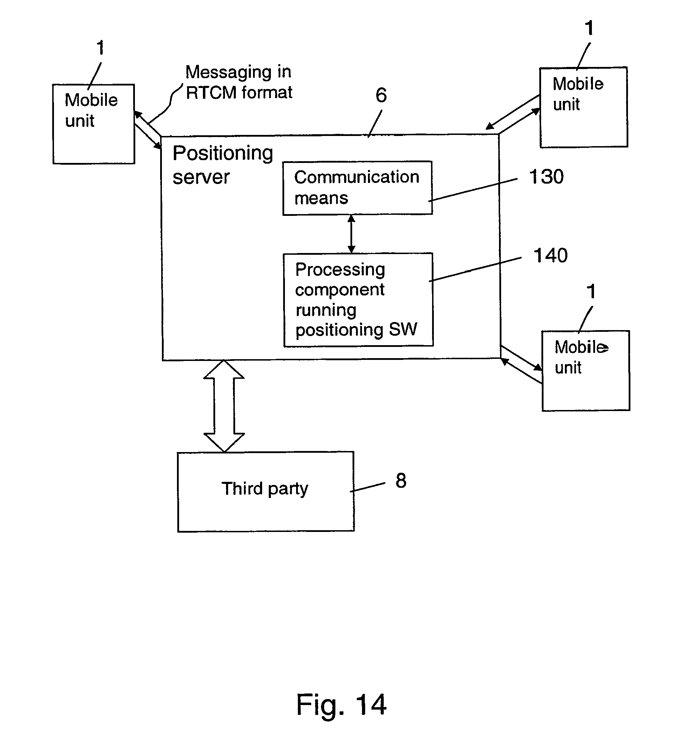

In another exemplary embodiment of the invention, a positioning server is not limited to forward positioning related messages between mobile units. It may also create itself position information for a particular set of mobile units in order to reduce the processing load at the mobile units. This is illustrated in Figure 14.

Figure 14 presents a positioning server 6, a plurality of mobile units 1 linked to the positioning server 6, and a third party device 8 which is equally linked to the positioning server 6.

The positioning server 6 comprises communication means 130 and a processing component 140.

A positioning of mobile units 1 may be initialized by a request by one of the mobile units 1 or by a request by the third party device 8. The request is received at the positioning server 6 via the communication means 130 and forwarded to the processing component 140. The processing component 140 requests and receives thereupon GNSS measurement data from a plurality of mobile units 1 via the communication means 130. The processing component 140 runs a positioning software which determines the relative positions of the mobile units 1 among each other and sends the position information via the communication means 130 to the involved mobile units 1 and/or to the third party device 8. Determining the relative positions includes for instance determining single differences, determining double difference, forming smoothed double code differences, compute a floating solution, perform an integer ambiguity resolution, form pseudoranges or ranges and compute the relative positions, as described with reference to Figure 2. A third party device 8 can use the resulting information to offer different services or applications. Alternatively, a third party device 8 could also communicate directly with the mobile units 1 in order to receive information on their relative positions.

In addition the processing component 140 may create and provide other information on the mobile units 1, for example the absolute and/or relative velocity, the angular velocity, the estimated trajectory, time and/or location of estimated encounters and/or the direction of a mobile unit 1.

It is to be understood that the processing component 140 may also run any software belonging to a positioning support component 131, the privacy component 132 and the assistance data component 133 of Figure 13, as well as any other software implemented in a processing server.

Up to now, only a relative positioning of mobile units 1 has been dealt with. In some embodiments of the invention, however, also a reliable absolute positioning is enabled.

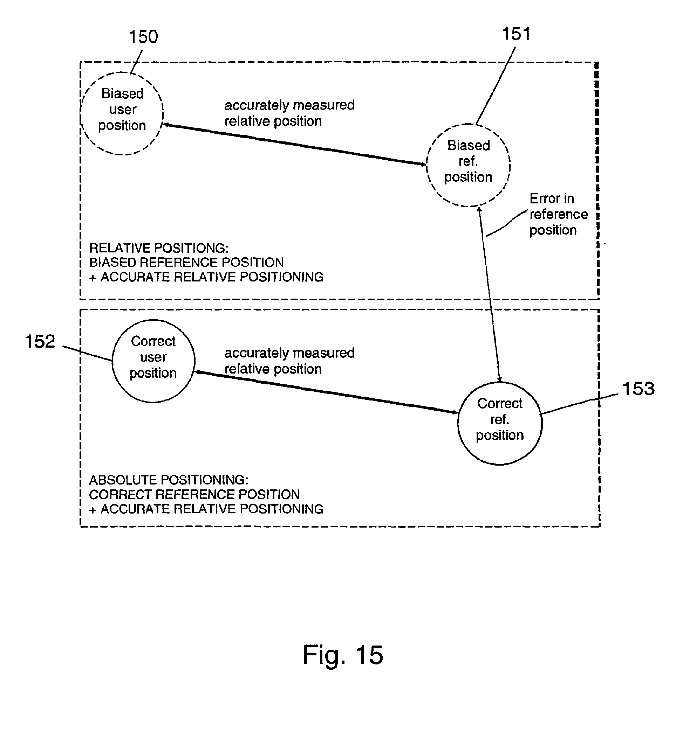

Figure 15 illustrates the difference between relative and absolute positioning.

In the upper half of Figure 15, the position 150 of a user mobile unit and the assumed position 151 of a reference mobile unit are indicated. In accordance with the approach presented with reference to Figure 2, an accurate relative position of the user mobile unit compared to the reference mobile unit can be determined. If the reference mobile unit only has biased information on its position 151 available, however, also any absolute position 150 of the user mobile unit which can be determined based on the relative positioning will be biased.

In the lower half of Figure 15, the position 152 of a user mobile unit and the known position 153 of a reference mobile unit are indicated. In accordance with the approach presented with reference to Figure 2, an accurate relative position of the user mobile unit compared to the reference mobile unit can be determined. Here, the reference mobile unit is moreover assumed to have accurate information available on its position 153. Therefore, the correct position 152 of the user mobile unit can be determined based on the correct position of the reference mobile unit and the determined accurate relative position.

The error between the biased reference position 151 in the upper half of Figure 15 compared to the correct reference position 153 in the lower half of Figure 15 is indicated by an arrow. This error results in exactly the same error in the user mobile unit position 150 compared to the accurate user mobile unit position 152.

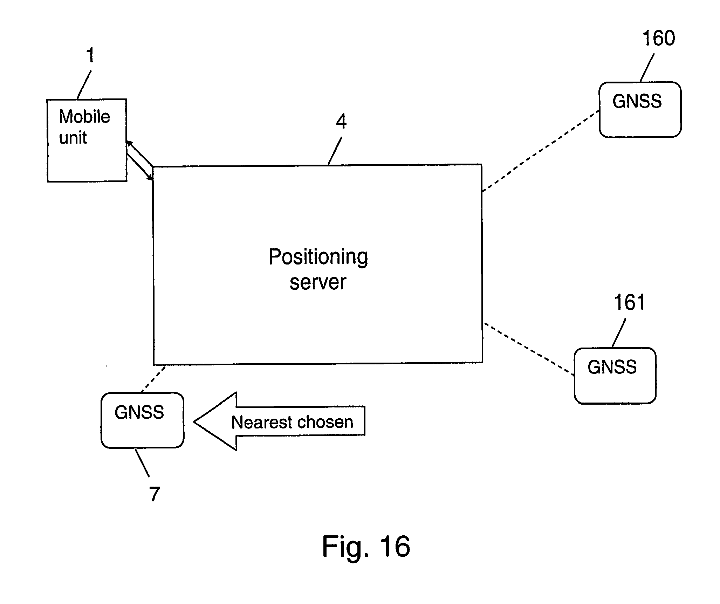

Figure 16 is a diagram illustrating an exemplary embodiment of the invention in which an accurate absolute position of a mobile unit can be determined.

Figure 16 presents a positioning server 4, to which a plurality of GNSS receivers 7, 160, 161 are coupled. The GNSS receivers 7, 160, 161 can be physically coupled to the positioning server 4 or be located farther away. Further, a mobile unit 1 is linked to the positioning server 4.

The precise location of the GNSS receivers 7, 160, 161 is known at the positioning server 4. The positioning server 4 moreover has access to GNSS measurements performed at these GNSS receivers 7, 160, 161.

When a mobile unit 1 transmits an initialization request to the positioning server 4, the positioning server 4 first determines the GNSS receiver 7 which is located closest to the mobile unit 1.

The positioning server 4 then receives GNSS measurement data from various linked mobile units 1 and retrieves measurement data from the closest GNSS receiver 7. Based on the received measurement data, the positioning server 4 determines the relative position of the mobile units 1. In addition, the positioning server 4 determines the relative position of one of the mobile units 1 relative to the GNSS receiver 7. Based on the precisely known location of the GNSS receiver 7, the positioning server 4 is now able to calculate in addition the absolute position of the mobile units 1. Since the accuracy of the relative positioning can be very high, the accuracy of the calculated absolute positions of the mobile units 1 depends on the accuracy of the known position of the GNSS receiver 7.

Alternatively, the positioning server 4 could only gather all required information and provide it to one of the mobile units 1 for performing the computations, similarly as described with reference to Figure 13.

Finally, the positioning may also make use of a network of interconnected positioning servers 4, 5, 6, as illustrated by way of example in Figures 1, 17 and 18.

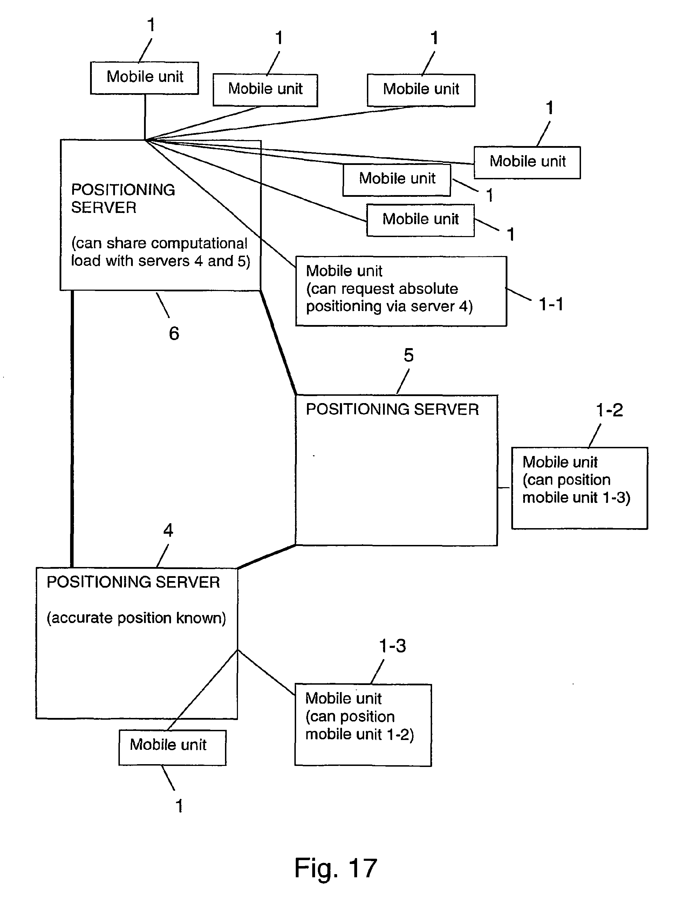

Figure 17 presents a network of three interconnected positioning servers 4, 5, 6, which may be for instance the same as presented in Figure 1. The positioning servers 4, 5, 6 may be interconnected, for example, using an Internet connection, a GPRS connection or a WLAN connection, etc. Each of the positioning servers 4, 5, 6 is able to carry out positioning computations for attached mobile units 1 as described with reference to Figure 14.

To one of the positioning servers 6, a large number of mobile units 1 is connected, including mobile unit 1-1. To another one of the positioning servers 5, only a single mobile unit 1, mobile unit 1-2, is connected. To the third positioning server 4, two mobile units 1 are connected, including mobile unit 1-3.

Due to the unequal distribution of mobile units 1 to the positioning servers 4, 5, 6, positioning server 6 may share its computational load with positioning servers 4 and 5.

Further, the positioning servers 4, 5, 6 may share positioning information among each other, in order to enable a relative positioning of mobile units 1 connected to different positioning servers 4, 5, 6. In Figure 17, for instance mobile units 1-2 and 1-3 might determine their relative position making use of the link between positioning server 4 and positioning server 5 for exchanging the required GNSS measurement data provided by mobile unit 1-2 and mobile unit 1-3.

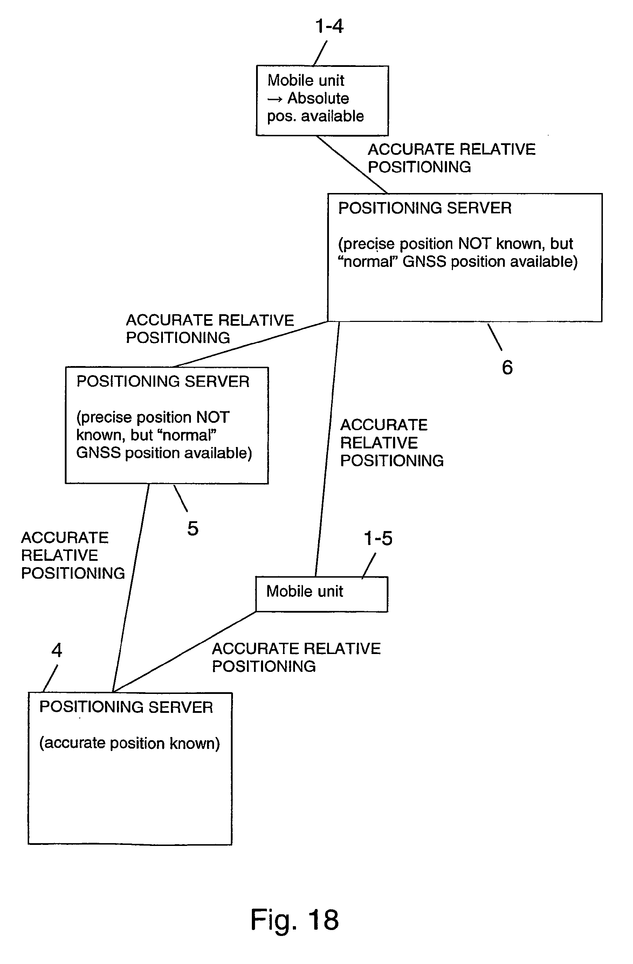

An absolute positioning of a mobile unit may be supported even if neither the accurate position of the positioning server to which the mobile unit is linked, nor the accurate position of a GNSS receiver connected to this positioning server is known. An absolute positioning can be achieved in this case using the network, if the accurate position of any one of the positioning servers or the accurate position of a GNSS receiver attached to any one of the positioning servers is known, as will be explained in more detail with reference to Figure 18.

Figure 18 presents again a network of three positioning servers 4, 5, 6. Each of the positioning servers 4, 5, 6 comprises a GNSS receiver (not shown) which enables GNSS measurements at the location of the respective server. In addition, the precise absolute position of one of the positioning servers 4 is known.

A first mobile unit 1-4 is connected to positioning server 6. A second mobile unit 1-5 may be connected to positioning server 6 and to positioning server 4.

Now, the accurate absolute position of mobile unit 1-4 is to be determined.

In one alternative, the accurate position of positioning server 4 relative to the position of positioning server 5 is determined based on GNSS measurements, similarly as described with reference to Figure 2. In addition, the accurate position of positioning server 6 relative to the position of positioning server 5 is determined based on GNSS measurements, similarly as described with reference to Figure 2. In addition, the accurate position of mobile unit 1-4 relative to the position of positioning server 6 is determined based on GNSS measurements, similarly as described with reference to Figure 2. Based on the resulting total relative position of the mobile unit 1-4 compared to the position of positioning server 4, and on the known absolute position of positioning server 4, the exact absolute position of mobile unit 1-4 can be determined.

In another alternative, the accurate position of mobile unit 1-5 relative to the position of positioning server 4 is determined based on GNSS measurements. In addition, the accurate position of positioning server 6 relative to the position of mobile unit 1-5 is determined based on GNSS measurements. In addition, the accurate position of mobile unit 1-4 relative to the position of positioning server 6 is determined based on GNSS measurements. Based on the resulting total relative position of the mobile unit 1-4 compared to the position of positioning server 4 and on the known absolute position of positioning server 4, the exact absolute position of mobile unit 1-4 can be determined, for instance by a processing component of positioning server 4 or by a processing component of positioning server 6.

Moreover, when there are many positioning servers 4, 5, 6 and many mobile units 1 connected to these positioning servers 4, 5, 6, a large amount of measurement data can be gathered in the network. This data can be used for modeling the atmosphere and parts of it, for modeling the troposphere, for modeling the ionosphere, etc.

It is to be noted that the described embodiments constitute only selected ones of a variety of possible embodiments of the invention. Further, any of the described embodiments can be used separately or in combination with at least one other of the described embodiments.

**Claims**

1. A positioning server (4,5,6) for supporting a positioning of assemblies (1), which assemblies (1) are adapted to receive signals from at least one satellite (S1,S2) of a global navigation satellite system, said positioning server comprising:

   - a processing component adapted to perform positioning calculations for at least one assembly (1) based on information on satellite signals received by said at least one assembly (1),
   **characterized in that**
   - said information is information received by at least one assembly (1) adapted to establish a communication link to said positioning server (4,5,6); and
   - said processing component is adapted to exchange positioning information with at least one other positioning server (4,5,6) of a positioning server network, said at least one other positioning server (4,5,6) adapted to establish a connection to one or more assemblies (1).

2. A positioning server (4,5,6) according to claim 1, wherein said processing component is adapted to perform as well at least a part of positioning calculations for assemblies (1) connected to at least one other of said positioning servers (4,5,6).

3. A positioning server (4,5,6) according to claim 1, wherein said processing component is adapted to exchange with another positioning server (4,5,6) information on satellite signals received by assemblies (1) connected to said other positioning servers (4, 5, 6) .

4. A positioning server (4,5,6) according to claim 1, wherein the absolute position of said positioning servers (4,5,6) is available and wherein said positioning server (4,5,6) is adapted to receive signals from at least one satellite (S1,S2) of a global navigation satellite system.

5. A positioning server network for supporting a positioning of assemblies (1), which assemblies (1) are adapted to receive signals from at least one satellite (S1,S2) of a global navigation satellite system, said positioning server network comprising a plurality of positioning servers (4,5,6) according to claim 1.

6. A positioning server network according to claim 5, wherein at least one of said positioning servers (4,5,6) is adapted to perform as well at least a part of positioning calculations for assemblies (1) connected to at least one other of said positioning servers (4, 5, 6) .

7. A positioning server network according to claim 5, wherein said positioning servers (4,5,6) are adapted to exchange among each other information on satellite signals received by assemblies (1) connected to at least one of said positioning servers (4,5,6).

8. A positioning server network according to claim 5, wherein the absolute position of at least one of said positioning servers (4,5,6) is available and at least some of said positioning servers (4,5,6) are adapted to receive signals from at least one satellite (S1,S2) of a global navigation satellite system.

9. A system comprising a positioning server network according to one of claims 5 to 8 and at least one assembly (1), which assembly (1) is adapted to receive signals from at least one satellite (S1,S2) of a global navigation satellite system and which assembly (1) is adapted to establish a communication link with a positioning server (4,5,6) of said positioning server network.

10. A method for supporting a positioning of assemblies (1), which assemblies (1) are adapted to receive signals from at least one satellite (S1,S2) of a global navigation satellite system, said method comprising at a positioning server (4,5,6) of a positioning server network

   - performing positioning calculations for at least one assembly (1) based on information on satellite signals received by said at least one assembly (1),
   **characterized in that**
   - said information is information received by at least one assembly (1) adapted to establish a communication link to said positioning server (4, 5, 6); and
   - said method comprises exchanging positionning information with at least one other positioning server (4,5,6) of said positioning server network, said at least one other positioning server (4,5,6) adapted to establish a connection to one or more assemblies (1).

11. A method according to claim 10, comprising performing at one of said positioning servers (4,5,6) at least a part of positioning calculations for assemblies (1) connected to at least one other of said positioning servers (4,5,6).

12. A method according to claim 10, comprising exchanging among said positioning servers (4,5,6) information on satellite signals received by assemblies (1) connected to at least one of said positioning servers (4,5,6).

13. A method according to claim 10, wherein the absolute position of at least one of said positioning servers (4,5,6) is available, said method comprising receiving at least at some of said positioning servers (4,5,6) signals from at least one satellite (S1,S2) of a global navigation satellite system.

14. A software code for supporting a positioning of assemblies (1), which assemblies (1) are adapted to receive signals from at least one satellite (S1,S2) of a global navigation satellite system, said software code realizing the following steps when running in a processing component (140) of a positioning server (4) of a positioning server network:

   - performing positioning calculations for at least one assembly (1) based on information on satellite signals received by said at least one assembly (1),
   **characterized in that**
   - said information is information received by at least one assembly (1) adapted to establish a communication link to said positioning server (4,5,6); and
   - said software code further realizes the following steps when running in said processing component (140) : exchanging positioning information with at least one other positioning server (4,5,6) of a positioning server network, said at least one other positioning server (4,5,6) adapted to establish a connection to one or more assemblies (1).

**Patentansprüche**

1. Positionsbestimmungsserver (4, 5, 6) zur Unterstützung einer Positionsbestimmung von Anordnungen (1), wobei die Anordnungen (1) geeignet sind, Signale von mindestens einem Satelliten (S1, S2) eines globalen Satellitennavigationssystems zu empfangen, wobei der Positionsbestimmungsserver aufweist:

   - eine Verarbeitungskomponente, die angepasst ist, um auf der Basis von Informationen über Satellitensignale, die durch mindestens eine Anordnung (1) empfangen wurden, Berechnungen zur Positionsbestimmung für die mindestens eine Anordnung (1) durchführen,
   **dadurch gekennzeichnet, dass**
   - die Informationen Informationen sind, die durch mindestens eine Anordnung (1) empfangen wurden, die geeignet ist, eine Kommunikationsverbindung zu dem Positionsbestimmungsserver (4, 5, 6) herzustellen; und
   - die Verarbeitungskomponente angepasst ist, um die Informationen zur Positionsbestimmung mit mindestens einem weiteren Positionsbestimmungsserver (4, 5, 6) eines Positionsbestimmungsserver-Netzwerks auszutauschen, wobei der mindestens eine weitere Positionsbestimmungsserver (4, 5, 6) angepasst ist, eine Verbindung zu einer oder mehreren Anordnungen (1) herzustellen.

2. Positionsbestimmungsserver (4, 5, 6) nach Anspruch 1, wobei die Verarbeitungskomponente ebenso angepasst ist, um mindestens einen Teil der Berechnungen zur Positionsbestimmung für Anordnungen (1) durchzuführen, die mit mindestens einem weiteren der Positionsbestimmungsserver (4, 5, 6) verbunden sind.

3. Positionsbestimmungsserver (4, 5, 6) nach Anspruch 1, wobei die Verarbeitungskomponente angepasst ist, um mit einem weiteren Positionsbestimmungsserver (4, 5, 6) Informationen über Satellitensignale auszutauschen, die von Anordnungen (1) empfangen wurden, die mit den weiteren Positionsbestimmungsservern (4, 5, 6) verbunden sind.

4. Positionsbestimmungsserver (4, 5, 6) nach Anspruch 1, wobei die absolute Position der Positionsbestimmungsserver (4, 5, 6) verfügbar ist und wobei der Positionsbestimmungsserver (4, 5, 6) angepasst ist, um Signale von mindestens einem Satelliten eines globalen Satellitennavigationssystems (S1, S2) zu empfangen.

5. Positionsbestimmungsservernetzwerk zur Unterstützung einer Positionsbestimmung von Anordnungen (1), wobei die Anordnungen (1) geeignet sind, Signale von mindestens einem Satelliten (S1, S2) eines globalen Satellitennavigationssystems zu empfangen, wobei das Positionsbestimmungsservernetzwerk mehrere Positionsbestimmungsserver (4, 5, 6) nach Anspruch 1 aufweist.

6. Positionsbestimmungsservernetzwerk nach Anspruch 5, wobei mindestens einer der Positionsbestimmungsserver (4, 5, 6) angepasst ist, um ebenso mindestens einen Teil von Berechnungen zur Positionsbestimmung für Anordnungen (1) durchzuführen, die mit mindestens einem weiteren Positionsbestimmungsserver (4, 5, 6) verbunden sind.

7. Positionsbestimmungsserver-Netzwerk nach Anspruch 5, wobei die Positionsbestimmungsserver (4, 5, 6) angepasst sind, um untereinander Informationen über Satellitensignale auszutauschen, die von Anordnungen (1) empfangen wurden, die mit mindestens einem der Positionsbestimmungsserver (4, 5, 6) verbunden sind.

8. Positionsbestimmungsservernetzwerk nach Anspruch 5, wobei die absolute Position von mindestens einem der Positionsbestimmungsserver (4, 5, 6) verfügbar ist und wobei mindestens einige der Positionsbestimmungsserver (4, 5, 6) angepasst sind, um Signale von mindestens einem Satelliten (S1, S2) eines globalen Satellitennavigationssystems zu empfangen.

9. System, das ein Positionsbestimmungsservernetzwerk nach einem der Ansprüche 5 bis 8 und mindestens eine Anordnung (1) aufweist, wobei die Anordnung (1) angepasst ist, um Signale von mindestens einem Satelliten (S1, S2) eines globalen Satellitennavigationssystems zu empfangen, und wobei die Anordnung (1) angepasst ist, um eine Kommunikationsverbindung mit einem Positionsbestimmungsserver (4, 5, 6) des Positionsbestimmungsservernetzwerks herzustellen.

**10.** Verfahren zur Unterstützung einer Positionsbestimmung von Anordnungen (1), wobei die Anordnungen (1) geeignet sind, Signale von mindestens einem Satelliten (S1, S2) eines globalen Satellitennavigationssystems zu empfangen, wobei das Verfahren in einem Positionsbestimmungsserver (4, 5, 6) eines Positionsbestimmungsservernetzwerks umfasst:

- Duchführen von Berechnungen zur Positionsbestimmung für mindestens eine Anordnung (1) auf der Basis von Informationen über Satellitensignale, die durch die mindestens eine Anordnung (1) empfangen wurden, **dadurch gekennzeichnet, dass**
- die Informationen Informationen sind, die durch mindestens eine Anordnung (1) empfangen wurden, die geeignet ist, eine Kommunikationsverbindung zu dem Positionsbestimmungsserver (4, 5, 6) herzustellen; und
- das Verfahren ein Austauschen von Informationen zur Positionsbestimmung mit mindestens einem weiteren Positionsbestimmungsserver (4, 5, 6) des Positionsbestimmungsservernetzwerks umfasst, wobei der mindestens eine weitere Positionsbestimmungsserver (4, 5, 6) geeignet ist, eine Verbindung zu einer oder mehreren Anordnungen (1) herzustellen.

**11.** Verfahren nach Anspruch 10, das in einem der Positionsbestimmungsserver (4, 5, 6) ein Durchführen mindestens eines Teils der Berechnungen zur Positionsbestimmung für Anordnungen (1) umfasst, die mit mindestens einem anderen der Positionsbestimmungsserver (4, 5, 6) verbunden sind.

**12.** Verfahren nach Anspruch 10, das ein Austauschen von Informationen über Satellitensignale unter den Positionsbestimmungsservern (4, 5, 6) umfasst, die von Anordnungen (1) empfangen wurden, die mit mindestens einem der Positionsbestimmungsserver (4, 5, 6) verbunden sind.

**13.** Verfahren nach Anspruch 10, wobei die absolute Position von mindestens einem der Positionsbestimmungsserver (4, 5, 6) verfügbar ist, und wobei das Verfahren ein Empfangen von Signale von mindestens einem Satelliten (S1, S2) eines globalen Satellitennavigationssystems an mindestens einigen der Positionsbestimmungsserver (4, 5, 6) umfasst.

**14.** Softwarecode zur Unterstützung einer Positionsbestimmung von Anordnungen (1), wobei die Anordnungen (1) geeignet sind, Signale von mindestens einem Satelliten (S1, S2) eines globalen Satellitennavigationssystems zu empfangen, und wobei der Softwarecode die folgenden Schritte realisiert, wenn er in einer Verarbeitungskomponente (140) eines Positionsbestimmungsservers (4) eines Positionsbestimmungsservernetzwerks ausgeführt wird:

- Durchführen von Berechnungen zur Positionsbestimmung für mindestens eine Anordnung (1) auf der Basis von Informationen über Satellitensignale, die durch die mindestens eine Anordnung (1) empfangen wurden, **dadurch gekennzeichnet, dass**
- die Informationen Informationen sind, die durch mindestens eine Anordnung (1) empfangen wurden, die geeignet ist, eine Kommunikationsverbindung zu dem Positionsbestimmungsserver (4, 5, 6) herzustellen; und
- der Softwarecode ferner die folgenden Schritte realisiert, wenn er in der Verarbeitungskomponente (140) ausgeführt wird: Austauschen von Informationen zur Positionsbestimmung mit mindestens einem weiteren Positionsbestimmungsserver (4, 5, 6) eines Positionsbestimmungsservernetzwerks, wobei der mindestens eine weitere Positionsbestimmungsserver (4, 5, 6) geeignet ist, eine Verbindung zu einer oder mehreren Anordnungen (1) herzustellen.

**Revendications**

**1.** Serveur de localisation (4, 5, 6) destiné à prendre en charge un positionnement d'ensembles (1), lesquels ensembles (1) sont aptes à recevoir des signaux provenant d'au moins un satellite (S1, S2) d'un système de navigation par satellite mondial, ledit serveur de localisation comprenant :

- un composant de traitement apte à mettre en oeuvre des calculs de localisation pour au moins un ensemble (1) sur la base d'informations sur des signaux de satellite reçus par ledit au moins un ensemble (1) ;
**caractérisé en ce que** :
- lesdites informations sont des informations reçues par au moins un ensemble (1), apte à établir une liaison de communication audit serveur de localisation (4, 5, 6) ; et
- ledit composant de traitement est apte à échanger des informations de localisation avec au moins un autre serveur de localisation (4, 5, 6) d'un réseau de serveurs de localisation, ledit au moins un autre serveur de localisation (4, 5, 6) étant apte à établir une connexion à un ou plusieurs ensembles (1).

**2.** Serveur de localisation (4, 5, 6) selon la revendication 1, dans lequel ledit composant de traitement est apte à mettre en oeuvre en outre au moins une partie de calculs de localisation pour des ensembles (1) connectés à au moins un autre desdits serveurs de localisation (4, 5, 6).

**3.** Serveur de localisation (4, 5, 6) selon la revendication 1, dans lequel ledit composant de traitement est apte à échanger, avec un autre serveur de localisation (4, 5, 6), des informations sur des signaux de satellite reçus par des ensembles (1) connectés auxdits autres serveurs de localisation (4, 5, 6).

**4.** Serveur de localisation (4, 5, 6) selon la revendication 1, dans lequel la position absolue desdits serveurs de localisation (4, 5, 6) est disponible, et dans lequel ledit serveur de localisation (4, 5, 6) est apte à recevoir des signaux en provenance d'au moins un satellite (S1, S2) d'un système de navigation par satellite mondial.

**5.** Réseau de serveurs de localisation destiné à prendre en charge un positionnement d'ensembles (1), lesquels ensembles (1) sont aptes à recevoir des signaux en provenance d'au moins un satellite (S1, S2) d'un système de navigation par satellite mondial, ledit réseau de serveurs de localisation comprenant une pluralité de serveurs de localisation (4, 5, 6) selon la revendication 1.

**6.** Réseau de serveurs de localisation selon la revendication 5, dans lequel au moins l'un desdits serveurs de localisation (4, 5, 6) est apte à mettre en oeuvre en outre au moins une partie de calculs de localisation pour des ensembles (1) connectés à au moins un autre desdits serveurs de localisation (4, 5, 6).

**7.** Réseau de serveurs de localisation selon la revendication 5, dans lequel lesdits serveurs de localisation (4, 5, 6) sont aptes à échanger mutuellement des informations sur des signaux de satellite reçus par des ensembles (1) connectés à au moins l'un desdits serveurs de localisation (4, 5, 6).

**8.** Réseau de serveurs de localisation selon la revendication 5, dans lequel la position absolue d'au moins l'un desdits serveurs de localisation (4, 5, 6) est disponible et au moins certains desdits serveurs de localisation (4, 5, 6) sont aptes à recevoir des signaux en provenance d'au moins un satellite (S1, S2) d'un système de navigation par satellite mondial.

**9.** Système comprenant un réseau de serveurs de localisation selon l'une quelconque des revendications 5 à 8, et au moins un ensemble (1), lequel ensemble (1) est apte à recevoir des signaux en provenance d'au moins un satellite (S1, S2) d'un système de navigation par satellite mondial, et lequel ensemble (1) est apte à établir une liaison de communication avec un serveur de localisation (4, 5, 6) dudit réseau de serveurs de localisation.

**10.** Procédé destiné à prendre en charge un positionnement d'ensembles (1), lesquels ensembles (1) sont aptes à recevoir des signaux en provenance d'au moins un satellite (S1, S2) d'un système de navigation par satellite mondial, ledit procédé comprenant les étapes ci-dessous consistant à, au niveau d'un serveur de localisation (4, 5, 6) d'un réseau de serveurs de localisation :

- mettre en oeuvre des calculs de localisation pour au moins un ensemble (1) sur la base d'informations sur des signaux de satellite reçus par ledit au moins un ensemble (1) ;
**caractérisé en ce que** :
- lesdites informations sont des informations reçues par au moins un ensemble (1) apte à établir une liaison de communication au niveau dudit serveur de localisation (4, 5, 6) ; et
- ledit procédé comprend l'étape consistant à échanger des informations de localisation avec au moins un autre serveur de localisation (4, 5, 6) dudit réseau de serveurs de localisation, ledit au moins un autre serveur de localisation (4, 5, 6) étant apte à établir une connexion à un ou plusieurs ensembles (1).

**11.** Procédé selon la revendication 10, comprenant l'étape consistant à mettre en oeuvre, au niveau de l'un desdits serveurs de localisation (4, 5, 6), au moins une partie de calculs de localisation pour des ensembles (1) connectés à au moins un autre desdits serveurs de localisation (4, 5, 6).

**12.** Procédé selon la revendication 10, comprenant l'étape consistant à échanger parmi lesdits serveurs de localisation (4, 5, 6) des informations sur des signaux de satellite reçus par des ensembles (1) connectés à au moins l'un desdits serveurs de localisation (4, 5, 6).

**13.** Procédé selon la revendication 10, dans lequel la position absolue d'au moins l'un desdits serveurs de localisation (4, 5, 6) est disponible, ledit procédé comprenant l'étape consistant à recevoir au moins, au niveau de certains desdits serveurs de localisation (4, 5, 6), des signaux en provenance d'au moins un satellite (S1, S2) d'un système de navigation par satellite mondial.

**14.** Code logiciel destiné à prendre en charge un positionnement d'ensembles (1), lesquels ensembles (1) sont aptes à recevoir des signaux en provenance d'au moins un satellite (S1, S2) d'un système de navigation par satellite mondial, ledit code logiciel mettant en oeuvre les étapes ci-après, lors de son exécution au sein d'un composant de traitement (140) d'un serveur de localisation (4) d'un réseau de serveurs de localisation, consistant à :

- mettre en oeuvre des calculs de localisation pour au moins un ensemble (1) sur la base d'informations sur des signaux de satellite reçus par ledit au moins un ensemble (1) ;
**caractérisé en ce que** :
- lesdites informations sont des informations reçues par au moins un ensemble (1) apte à établir une liaison de communication audit serveur de localisation (4, 5, 6) ; et
- ledit code logiciel met en outre en oeuvre l'étape ci-après, lors de son exécution au sein dudit composant de traitement (140), consistant à : échanger des informations de localisation avec au moins un autre serveur de localisation (4, 5, 6) d'un réseau de serveurs de localisation, ledit au moins un autre serveur de localisation (4, 5, 6) étant apte à établir une connexion à un ou plusieurs ensembles (1).

Fig. 1

**User mobile unit**                    **Reference mobile unit**

| Generate and send<br>initialization request | ⟹ | Receive initialization<br>request |

↓                                           ↓

| Perform carrier phase and<br>code measurements | | Perform carrier phase and<br>code measurements |

↓                                           ↓

| Receive measurements<br>from reference mobile unit | ⟸ | Send measurements |

↓

| Form single code and<br>phase differences |

↓

| Form double code and<br>phase differences |

↓

| Form smoothed double<br>code differences |

↓

| Compute floating solution |

↓

| Perform integer ambiguity<br>resolution |

↓

| Form pseudoranges or<br>ranges |

↓

| Compute position |

↓

| Send position information | ⟹ | Receive position<br>information |

# Fig. 2

## Fig. 3

PHONE

SHARED RESOURCES

- data processing unit

GNSS measurements

GNSS RECEIVER

## Fig. 4

PHONE

SHARED RESOURCES

- data processing unit

GNSS measurements

GNSS RECEIVER

Fig. 5

Fig. 6

74

Sensor

73

Memory

3

GNSS receiver

Measurements

**Cellular phone**

71

2

Positioning
application

72

Com.
means

Communication
with other mobile
units or servers

API
SW

70

# Fig. 7

Positioning
request

Measurement

These measurements are stored to memory
and are used for position information

GNSS receiver of
user mobile unit

Time

GNSS receiver of
reference mobile unit starts
measuring when requested.

GNSS receiver of
reference mobile unit

Fig. 8

Measurements stored to memory and used for position information creation

Used for positioning

GNSS receiver of reference mobile unit

GNSS receiver of user mobile unit starts measuring when it initiates positioning.

Time

Positioning request

Used for positioning

GNSS receiver of user mobile unit

Fig. 9

EP 1 802 991 B1

Positioning
request

These measurements are stored to memory
and are used for position information

GNSS receiver of
user mobile unit

Time

These measurements are stored to memory
and are used for position information

GNSS receiver of
reference mobile unit

Fig. 10

| UI application | Possible user response |
|---|---|
| Desired accuracy of relative positioning with respect to reference mobile unit? | 10 meters. |
| Achieved. Continue to have more accurate position with respect to reference mobile unit? | Yes. |
| Accuracy now 10 centimers. Continue? | No. |

## Fig. 11

125

1

120

122

71

position SW  ⟷  UI SW  ⟷  com. means

72

121

## Fig. 12

1

Mobile unit

Messaging in RTCM format

4

Positioning Server

Communication means — 130

133 — Assistance data component

Positioning support component — 131

Privacy component — 132

1

Mobile unit

1

Mobile unit

Fig. 13

**1**

Mobile
unit

Messaging in
RTCM format

**6**

**1**

Mobile
unit

Positioning
server

Communication
means ————— 130

Processing
component
running
positioning SW ———— 140

**1**

Mobile
unit

Third party ——— 8

Fig. 14

Fig. 15

Fig. 16

EP 1 802 991 B1

Fig. 17

**1-4**

Mobile unit
→ Absolute
pos. available

ACCURATE RELATIVE
POSITIONING

POSITIONING SERVER

(precise position NOT known, but
"normal" GNSS position available)

ACCURATE RELATIVE
POSITIONING

**6**

POSITIONING SERVER

(precise position NOT
known, but "normal"
GNSS position available)

ACCURATE
RELATIVE
POSITIONING

ACCURATE
RELATIVE
POSITIONING

**5**

**1-5**

Mobile unit

ACCURATE
RELATIVE
POSITIONING

**4**

ACCURATE RELATIVE
POSITIONING

POSITIONING SERVER

(accurate position known)

Fig. 18

**EP 1 802 991 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6229479 B1
- US 2002024461 A1